# EUROPEAN PATENT SPECIFICATION

(11) **EP 2 329 720 B1**
(45) Date of publication and mention of the grant of the patent: **07.02.2018**
(21) Application number: 10177563.3
(22) Date of filing: 20.09.2010
(51) Int. Cl.: A01P 1/00, A01N 59/00, A01N 59/06, A01N 61/00, C04B 103/67, C04B 18/14

(54) **Antimicrobially active agent for building industry, method of its production and use**
Antimikrobielles Mittel für die Bauindustrie, Produktionsmethode und Gebrauch davon
Agent antimicrobien pour l'industrie du bâtiment, la méthode de sa production et l'usage

(30) Priority: 23.09.2009 SK 500432009
(43) Date of publication of application: 08.06.2011
(73) Proprietor: Povazská cementáren, a.s., 01863 Ladce (SK)
(72) Inventor: Martauz, Pavel, 01863 Ladce (SK); Strigác, Július, 91101 Trencín (SK)
(74) Representative: Musil, Dobroslav

(56) References cited:
- EP-A1- 0 979 607
- JP-A- 2002 087 861
- Ciment ET AL: "Cement -Part 1: Composition, specifications and conformity criteria for common cements Contents Page", , 30 June 2000 (2000-06-30), XP055187450, Retrieved from the Internet: URL:http://www.rucem.ru/yabbfiles/Attachme nts/EN-197-1.pdf [retrieved on 2015-05-05]

## Description

### Technical field

The invention relates to use of metallurgical slags or the mixtures of metallurgical slags.

### Background of the invention

Problem of presence of microorganisms such as bacteria, yeast, (one-celled fungi), moulds (fibrous fungi), fungi, mosses, lichens on exteriors and in interiors of buildings and on various constructions, or nostocs, algae (primitive plants) at water plants and dams, in water and sewage pipelines, is serious not only in regard of hygienic, health and aesthetic issues, but also in regard of bio-deterioration of building materials. Their presence is conditioned to appropriate temperature and humidity conditions, depends on pH of environment, presence of oxygen, radiation, etc.

Biologic corrosion of concretes and mortars is caused by organic and inorganic acids, which arise by effect of mainly bacteria particularly sulfuric and nitrifying (oxidizing), which effect on hydrogen sulfide H₂S creates even sulfuric acid H₂SO₄ and on ammonia NH₃ nitric acid HNO₃, which belong to the strongest inorganic acids. By effect of other kinds of bacteria high-molecular organic acids are produced, such as humic acid or pyruvic acid and low-molecular organic acids such as formic acid, acetic acid, propionic acid, butyric acid, lactic acid, oxalic acid, malic acid, citric acid and others. These acid metabolites react in concretes and mortars mainly with calcerous components of concrete and mortar stone with development of their non-binding calcerous salts, thus causing degradation of the stone into its depth. In some cases, they can react also with components of aggregates, in some cases with admixtures and additives.

The danger of attack of concretes and mortars by microorganisms is increasing when using organic additives (polyvinylacetate, casein, methyl cellulose, lignosulphonate and so), or admixtures (scutch, sawdust, wood powder, wood chips, wood wool, wood fibers, split-wood and so). In regard of moulds, besides biochemical deterioration, mechanical deterioration comes along, e.g. by growth of their hyphae through volume of harden stone. Stone structure is deteriorated, in some cases even destroyed.

Antimicrobial protection of the buildings and constructions, or places with presence of microorganisms (damp masonry, building bases, etc.) or places with their ladleential occurrence (hospitals, schools, kitchens, pools, laundries, hygienic facilities, stores, industries like food industry, meat processing, distilleries, pharmaceutics, cosmetics, chemical, wood processing, various bio-productions, agriculture, rendering plants, water treatment corporations, sewage, waste water treatment plants, cooling towers) is thus very important.

To prevent presence, growth and reproduction of microorganisms, biocidal additives are added to concretes, mortars, plasters, cement glues, wooden constructions and wood-containing products (Bajza, A. and Rouseková, I., Technológia betónu /Technology of concrete/, Jaga, Bratislava, pgs. 70 and 156, 2006), that provides the building materials for bacteriocidal, bacteriostatic and fungicidal and fungistatic properties. However, these solutions are very expensive including high purchase and operation costs and along with that, many of biocidal additives possess only selective antimicrobial effect, not covering wide spectrum of microorganisms, the most of them is by effect of alkali environment of the hydrating concrete or mortar stone instable and has short time effect only.

Majority of biocidal additives contain organic compounds as antimicrobially active constituent. Market offers enormous number of antibacterial and anti-mould preparations, which, however, are not the object of the invention.

Disadvantage of currently used biocidal additives is, that majority of them has only selective antimicrobial effect, not covering wide spectrum of microorganisms, many of them are instable and have short time effect only and the biggest disadvantage is their price, because these preparations are costly. Even also investment costs for storage equipment, batching, mixing and homogenization in cement and cement containing mixtures and also operation costs are added to this price. Effect of biocidal additives is affected by their solubility in water and method of their application. Additives well soluble in water, after mixing water adding, are easily washed up from fresh concrete and cement containing mortar and lose their effect relatively quickly. Additives less soluble in water can, after longer time, diffuse to the surface from the hydrated stone and as well lose their effect relatively quickly.

Majority of biocidal additives decomposes by effect of alkali environment of hydrating concrete or mortar stone. In many cases, conventionally available biocidal additives are not suitable for building materials. However, exceptions exist, such as US 7223443, US4556426, RO 000000120968, JP 2005255551, JP 11012017, JP 03271206. JP 2002 087861 describes an antimicrobial admixture for cement, which contains CuO, ZnO, Ag₂O. As another possibility appears the use of organic compounds with bound metal ion such as Cu²⁺, Zn²⁺, Ca²⁺, Ba²⁺, dosing in amount of 0.025 to 2 % (by weight), WO 2006065259. Biocide can be added either in the form of powder, or can be bound in porous glass, ceramics, mineral or polymer with time sequential release of biocide. Combined organic-inorganic composite material composed of organic polymer with antibacterial and antifungal functional group, to which an inorganic part containing bivalent metal ion is bound, can also be used, according to JP 2002235008. As another carriers of antibacterial agents can also be particles of metal, glass, glass-ceramics, WO 2006064060, onto which oxide, oxide nitride, oxide carbide, nitride, carbide layer with content of antibacterial agent Ag⁺, Cu²⁺ a Zn²⁺, is applied in the form of inorganic compounds or metals. Besides powder glass with content of Ag⁺, Zn²⁺ a Cu²⁺, the carriers of Ag⁺, Zn²⁺ a Cu²⁺ in antimicrobial agents can also be zeolites, US 6924325, zeolite mineral mordenite (Ca,Na₂,K₂)Al₂Si₁₀O₂₄.7H₂O according to JP 08109108, ceramics on the basis of ignited calcium phosphate Ca₃(PO₄)₂ and feldspars according to JP 08259298, calcium phosphate compounds according to JP 06024919, crystalline or amorphous TiO₂ according to JP 2001106607. Also alone pure TiO₂ with photo-catalytic ability in the crystalline, amorphous forms, as fibrous, monoclinic, rutile, anatase can be used as antibacterial agent for cements according to JP 2000219564. Antimicrobial agent for cements can also be based on nickel Ni amorphous alloy applied on organic or inorganic nano and micro particles according to JP 09221347. Antimicrobial agent for cements can also be based on ammonia salts according to JP 2003292358. Fungicidal blended material suitable for fungicidal cements other than silicate gray and white can also be based on minerals of alkaline metals, alkali earth metals, non-metallic minerals and rare minerals in combination with zeolites, boron minerals, clays, kaolin, bentonite, acidic clays, apatites, sulphates of aluminium, zinc, calcium, barium, carbonate of strontium, oxides of zircon, sodium, lanthanum, cerium and neodymium, in which fungicidal effect is induced by ions of rare minerals, and which are added to cements in amount of 3 to 20 % according to JP 11302058.

From currently known antimicrobial effective mixtures having high content of CaO and glassy phase there is bioactive glass from the system SiO₂-Na₂O-CaO-P₂O₅ in the form of nanoparticles, which by contact with water solutions release active ions in time sequentially, create alkaline environment having antimicrobial effect (Waltimo, T. et al., J. Dent. Res., 86, (8) pgs. 754-757, 2007). Releasing of Na⁺, Ca²⁺ ions and inclusion of H₃O⁺ protons to glass structure raises pH of environment. Antimicrobial effect is increased also by releasing of SiO₂. They are used especially in dental medicine and orthopedics. Antimicrobial effect of bioactive glasses can be increased by doping with Ag⁺, which has wide spectral antimicrobial effects (Verné, E. et al., Biomaterials, 26:25, pgs. 5111-5119, 2005)

Antimicrobial glasses can have various chemical compositions, e.g. antimicrobial glass from system Ag₂O-ZnO-CaO-B₂O₃-P₂O₅ with slow releasing of Ag⁺ ions, US 6831028. Also B₂O₃, Al₂O₅, MgO, K₂O, CaF₂ can be associated to the system SiO₂-Na₂O-CaO-P₂O₅, and to which Ag⁺, Cu⁺, Cu²⁺ and Zn²⁺ ions are added, WO 2000015167 and US 7241459. Fluorides are basis for fluoroaluminatesilicate glasses SiO₂-Al₂O₃-F⁻ so called glass-ionomer cements used especially in dental medicine, which are able to set and harden in water environment, US 6765038. Glass-ionomer cements are composed of alkali and acid, which after mixing, react producing water and fluoride salts. Due to long time release of fluorides F- and the change of pH of environment, they belong among antimicrobial agents.

In cosmetics, soluble glass based on B₂O₃, SiO₂, Na₂O, Ag₂O or P₂O₅, CaO, Al₂O₃,Ag₂O or P₂O₅, MgO, Al₂O₃, Ag₂O, or P₂O₅, K₂O, CaO, CuO, containing at least one ion of domain Ag⁺, Cu⁺, Cu²⁺ or Zn²⁺ are used, US 5290544 and US 57666111. Ions released to water solution provide for long time antibacterial and antifungal effect without negative impact on skin.

However, through centuries used lime CaO, lime hydrate Ca(OH)₂ respectively, as such posses antimicrobial effect, what is exploited e.g. in elimination of microorganisms from waste water (Grabow, W., O., K. et al., Applied and Environmental Microbiology, Vol. 35, No. 4, (8) pgs. 663-669, 1978). Antimicrobial effect of materials with content of Ca(OH)₂, such as e.g. Ca(OH)₂/salicylate cements, depends on speed of releasing hydroxyl ions OH- out of slowly soluble Ca(OH)₂, and thus on pH of environment. (Vujašković, M. and Radoslavjević, B., Serbian Dental J., Vol. 53, pgs. 104-111, 2006). Increase of pH>9 prevents growth and biological activity of microorganisms.

Common portland cements, produced in huge amounts worldwide, belong to calcium silicate cements and by their chemical composition they belong to the system CaO-SiO₂-Al₂O₃-Fe₂O₃. They are produced from portland clinker, which chemical composition is characterized by various ratio of these four main oxides being 55 to 70% by weight CaO, 16 to 26% by weight SiO₂, 4 to 8 % by weight Al₂O₃ and 2 to 5% by weight Fe₂O₃, which mutually react at high temperatures, on the order 1450 °C, producing main clinker minerals in amounts in the range of 50 to 85% by weight of alite C₃S, 15 to 30% by weight of belite C₂S, 5 to 15% by weight C₃A and 5 to 15% by weight C₄AF (C=CaO, S=SiO₂, A=Al₂O₃, F=Fe₂O₃, M=MgO, P=P₂O₅, H=H₂O, N=Na₂O, K=K₂O), with high content of bound lime a small content of free lime CaO up to 2% by weight. Part of given CaO reacts to Ca(OH)₂ during hydratation of clinker phases according to reactions (1-3), which crystallizes as portlandite and of course OH- groups are released into the solution, which during setting of portland cement increase pH of environment and have antimicrobial effects, what is exploited in elimination of microorganisms from waste water by use of lime CaO, lime hydrate Ca(OH)₂ respectively (Grabow, W., O., K. et al., Applied and Environmental Microbiology, Vol. 35, No. 4, (8) pgs. 663-669, 1978).

CaO + H₂O → Ca(OH)₂ (1)

C₃S + H₂O → C-S-H (gel) + Ca(OH)₂ (2)

C₂S + H₂O → C-S-H (gel) + Ca(OH)₂ (3)

These antimicrobial effects of hydrating phases are by their re-crystallization during hardening completely lost over time and thus already substantially hydrated concrete or mortar stone can be attackable by microorganisms.

To calcium silicate cements belong also all cements with additives and admixtures according to European standard EN 197-1: 2000, especially cements such us white and colored cements with lowered content of C₄AF, sulphate-resistant cements and road cements with lowered content C₃A, belitic cements and cements having low hydrating heat and with low initial strength development with higher content of C₂S, mortar cements for masonry and plastering.

To special group of cements with low volume of production belong aluminous cement, in some cases also small group of cements based on phase 3CA.CaSO₄, so called sulphoaluminate-belite cements, which volume of production is however negligible.

Main phases of aluminous cements are calcium aluminates and among them especially CA phase, others are C₁₂A₇, CA₂ and C₂AS, C₂S. These cements hydrate very fast without releasing Ca(OH)₂.

But aluminous cements are used, due to their characteristics of fast setting, in the special mixtures with possibility to add antibacterial additive. As an example it can be dry plastering mixture with content of aluminous cement, sand and antibacterial additive according to JP 2006335597, hydraulic mixture containing calcium aluminate glass and antibacterial metal from group Zn, Cu, and\or Ag according to JP 2003206163, antibacterial and antifungal expansional agent based on free lime, anhydrite, hauyne (hauyne mineral (Na,Ca)₄₋₈Al₆Si₆(0,S)₂₄(SO₄,Cl)₁₋₂), calcium ferrite, calcium aluminoferite, calcium silicates and one or more representatives of group CuO, ZnO, or Ag₂O according to JP 2002087861.

Sulphoaluminate belite cements are used for expansive cement mixtures also with possibility of antibacterial additive. As an example it can be grouting mortar with expansive agent based on 3CA.CaSO₄ and antibacterial carbon fibers according to Korean patent 100600440, painting mixture based on white cement, 3CA.CASO₄, metakaoline, CaCO₃, SiO₂, polyacrylate and Ag⁺ nanoparticles according to JP 1020060055116.

Special group are calcium phosphate cements used in dental medicine and orthopedics having main phases from system CaO-H₃PO₄-H₂O, setting by acid-base reactions. Here belong hydroxyapatite cements EP 0639366 based on hydroxyapatite Ca₁₀(PO₄)₆(OH)₂ and other calcium phosphates such as tetracalcium phosphate (diphosphate tetracalcium) Ca₄(PO₄)₂O, amorphous and crystalline α- and β- tricalcium phosphate (phosphate tricalcium) Ca₃(PO₄)₂, dicalcium phosphate dihydrate CaHPO₄.2H₂O, dicalcium phosphate CaHPO₄, monocalcium phosphate monohydrate Ca(H₂PO₄)₂.H₂O, monocalcium phosphate Ca(H₂PO₄)₂, octacalcium phosphate Ca₈H₂(PO₄)₆.5H₂O, they can further contain CaO, Ca(OH)₂, CaCO₃. Antimicrobial additive, e.g. with organic base US 5968253, can be added to them. Antimicrobial properties of calcium phosphate cements on the basis of Ca₄(PO₄)₂O and Ca₁₀(PO₄)₆(OH)₂ are even higher than with Ca(OH)₂/salycilate cements, due to production of amorphous Ca(OH)₂ during their setting, which has higher solubility, than with Ca(OH)₂/salycilate cements and thus also more OH- groups are released to the environment (Gbureck, U. et al., J. Biomedical Mat. Res. Part B: Applied Biomaterials, Vol. 83B, No. 1, pgs. 132-137, 2007).

Apatite is used also in the mixture with wolastonite CaO.SiO₂ for the production of porous glass-ceramics, which serve as carrier for antibiotics (Kawanabe, K., et al., J. Bone Joint Surg, Vol. 80-B, No. 3 pgs. 527-530, 1998).

All these current solutions, however, are very expensive regarding to high purchase prices of biocidal additives, they require investments to production equipment, such as e.g. storage tanks, batch equipment, blending centers etc., they are associated with high operation costs, with threat of non-homogeneous distribution of antimicrobial additive within cement or cement containing loose matrix of building material, because amount of antimicrobial additive is several times smaller, and also threat of segregation of antimicrobial additive is present during transportation and especially in mixture with water in application of building material at desired location.

It would be advantageous to obtain generally available antimicrobial active agent for building industry, which could serve as additive, admixture or other component for cements, building binders, cement containing mixtures, building products and building materials with increased antimicrobial effects, and without investment costs and without a raise in operational costs, with good homogeneity in the mixture, without possibility to segregate in the fresh cement and mortar mixtures with water. It was discovered, that said suitable material for building industry are metallurgical slags.

### Summary of the invention

Invention is in use of metallurgical slags or the mixtures of metallurgical slags containing glassy phase, wherein if a slag from the production, processing, or refining of non-ferrous metals is used, the slag contains 5 to 23 % by weight of CaO, 27 to 45 % by weight of SiO₂, 14 to 32 % by weight of Fe and 0.1 to 3 %by weight of S, with the number of particles grater than 500 µm of maximum 99% by weight of overall granulometry as antimicrobially active agent for production of cements, building binders, cement containing mixtures and building products and building materials.

Metallurgical slags are obtained as by-products in the production and processing of metals. There are granulated blast-furnace slags, air-cooled blast-furnace slags, steel slags, ladle - calcerous slags and slags scrapped in production, processing and refining of non-ferrous metals. The broadest application of metallurgical slags is in building industry, in cement production, building binders, cement containing mixtures, building products and building materials.
Basically it concerns these main types of the slags:
- blast-furnace slags from pig iron production
- steel slags from production and refining of steels
- slags of secondary metallurgy from ladle furnaces processes
- slags from production, refining and processing of non-ferrous metals

The highest volumes of the slags develop in iron and steel production. Here slags develop basically in the three stages of production - reduction, steel production and secondary metallurgy (Sorrentino, F. and Gimenez, M. 11th Inter. Congress on the Chemistry of Cement 2003, Durban, South Africa, pgs. 2139-2146, 2003). Result of the first stage of reduction is pig iron and blast-furnace slag. Depending on the manner, in which melted blast-furnace slag is cooled and solidifies, four different types of slag are produced, granulated, air-cooled, pelleted and expanded. In the second stage, steel and steel slag is produced from pig iron in oxidizing process in oxygen converter and in electric arc furnace. In the third stage - secondary metallurgy, high-grade steels and slags develop from ladle furnace process - ladle slags. Slags from the second and the third stage are air-cooled only.

Currently, blast-furnace melted slags are ganulated by wet or semi-wet way (Demeter P., Mihok L. Baricová D. and Seilerová K., Acta Metallurgica Slovaca, 12, pgs. 67-75, 2006). In the wet granulation, melted slag is poured out of ladle to water pool, where the slag is granulated and solidified in the form of separate grains, or is poured through water jet nozzles in the granulation plant and then the slag falls into water pool. Their microstructure is in the major part formed by glass. Blast-furnace granulated slag is in the large volumes used in production of cement and concretes as latent hydraulic admixture. It is possible to use it also as slag sand.

Air-cooled blast-furnace slag is formed by pouring of melted slag to the slag pits with controlled cooling, where it cools at the open air forming crystalline structure with numerous macropores formed by gases released during cooling. After its solidification, the slag is extracted from the pits, crushed and sorted to the different fractions. It is then used as artificial compact aggregates - slag aggregates for building purposes. It serves as substitute for natural stone aggregates in the production of concrete for concrete constructions, road constructions, road and wide area stabilizations, recultivation and so.

Pelleted slag is formed by spreading of the melted slag over carbon plate (so called deflector), where a layer of slag is broken to pieces by jet of water, which are thrown to air by centrifugal force of rotating drum. When pieces of slag come to contact with the air they gain roundish spherical forms and expand under pressure of gases closed in the volume under solidified surface. The result of this are porous spherical pellets, separated regarding to dimensions of particles on the basis of curves of their flight.

Expanded slag is formed by pouring of melted blast-furnace slag into the shallow pits with water jet nozzles provided on their bottom. Water is through nozzles injected to melted slag, it evaporates and creates bubbles in the solidifying structure of slag, creating a product with low bulk weight. Solidified porous slag is then extracted, crushed and separated. Expanded slag is used in building industry as expanded slag aggregates for production of light-weight concretes.

By special processes of cooling of the liquid blast-furnace slag also other products are prepared such as slag wool, felt and foamed slag - pumice. The materials has low bulk weight, good heat and sound insulating properties, they are thus suitable for production of various kinds of insulating layers.

Steel slag is obtained in the process of refining metallic iron in oxygen converter and electric arc furnace. It contains notable part of refined metallic iron - raw steel. The steel slag such formed is then separated to two parts, to metallic part - steel scrap and demetallized slag in the multi-stage process of crushing, grinding and electromagnetic separation. Steel scrap is recycled by adding to the blast furnace and steel charge and demetallized steel slag is, after separation, used in the cement production as raw mixture component - ferrous correction of the cement raw meals, in the building industry as aggregates for base layers of the roads, railways, wide areas, dams, for soil stabilization. Its use as the aggregates for concretes for building constructions and cement-concrete pavements surface covers is prevented by presence of free lime, which in the presence of humidity hydrates to portlandite Ca(OH)₂ and volume changes by said reaction would destroy the concrete stone and cause destruction of the entire construction. This drawback can be moderated by natural ageing of the demetallized steel slag freely at the outside, where comes to interaction of free lime with air humidity, water coming from rain, snow and ice respectively. This process can be speed up by ageing with water steam, pressurized water steam, hydrating and aeration, additives - injecting of quartz sand to already liquid steel slag, where it binds with contained free lime creating calcium silicates.

Slags from ladle furnace processes - ladle slags called also calcerous slags, are obtained in the production of various kinds of steels in ladle furnaces. Various kinds of steels require different methods of processing, thus creating various kinds of the ladle slags with different composition and characteristics and regularly with very low possibility of their exploitation, therefore the majority of them is only landfilled. Slags contain high portion of free lime, by hydration of which self-degradation of their structure occurs. Their potential resides in their use as a source of CaO, SiO₂, Al₂O₃, MgO in the cement raw mixtures.

The slags from production, refining and processing of non-ferrous metals are obtained in the processes of coloured metallurgy of such metals as copper, titanium, nickel etc. These slags are exploitable at most for production of artificial aggregates designed especially for various base layers and stabilizations. They can be used in cements production as a flux in the burning of cement clinkers.

All kinds of metallurgical slags differ from each other by chemical composition and mineralogical composition. Regarding the chemical composition, they are very different in content of CaO and Fe₂O₃, FeO respectively and regarding the mineralogical composition they differ in content of glassy phase and phase composition of crystallized part.

The use of metallurgical slags in cements, building binders, cement containing mixtures, building products and building materials is regulated by valid European and national standards.

Granulated blast-furnace slag suitable for cements is defined according to European standard EN 197-1: 2000 and ground granulated blast-furnace slag for use in concrete, mortars and grout according to European standard EN 15167-1: 2006 as the glassy material made by rapid cooling of slag melt of suitable composition as obtained by smelting iron ore in blast furnace and contains at least two thirds by weight of glassy slag of chemical composition consisting at least of two thirds by weight of the sum of calcium oxide (CaO), magnesium oxide (MgO) and silicon dioxide (SiO₂). The reminder must contain aluminum oxide (Al₂O₃) together with small amount of other compounds. The weight ratio (CaO + MgO)/(SiO₂) must be greater than 1.0. Quick cooling includes quick cooling in water (granulation) and injection through water and air (pelleting).

The use of granulated blast furnace slag suitable as the component for cements, masonry and plastering mortars is defined according to EN 413-1: 2004, cements with low hydration heat release it is defined according to EN 197-1: 2000/A1: 2004, for cements with very low hydration heat release it is defined according to EN 14216: 2004, for blast-furnace slag cement with low initial strength it is defined according to EN 197-4: 2004, for blast-furnace slag sulphate resistant cements it is defined according to STN 72 2103.

According to EN 206-1: 2000 fine ground granulated blast-furnace slag can be ranked among admixtures for concrete of type II. - puzzolanic or latent hydraulic addition, and powdered crystalline slags can be ranked among admixtures of type I. - nearly inert addition. Admixtures of type II. - fine ground inorganic, puzzolanic, or latent hydraulic material, are added to concrete to improve certain properties, or to achieve special properties. Admixtures of type I. serve in concrete more or less as filler.

According to EN 12620: 2002 slags are classified as artificial aggregates for concrete. The compact aggregates made of air cooled blast-furnace slag must not present neither decomposition of calcium silicate nor decomposition of iron, it must be volume stable. The slags can be used as artificial aggregates also in mortars for masonry, plastering, floors, leveling, basis, maintenance, grouting, according to EN 13139: 2002, as artificial aggregates in non-cemented and hydraulic cemented materials used in building industry and road construction according to EN 13242: 2002. If the expanded slag is used as light-weight aggregates in light-weight concretes, mortars and grout, its properties are defined in EN 13055-1: 2002.

In current antimicrobial cement containing mixtures, ground granulated blast-furnace slag has been used as latent hydraulic admixture or as filler, disregarding its other application possibilities. As an example that can be mentioned are, cement mixture based on calcium aluminate cement, fine ground blast-furnace granulated slag and antibacterial additive based on Ag⁺ and/or Cu²⁺ according to JP 2006327866, cement mixture based on calcium aluminate compounds and colemanite (colemanite mineral is hydrated calcium triborate Ca[B₃O₄(OH)₃].H₂O), which further comprises one or more kinds of admixtures, of such type as fine ground blast-furnace granulated slag, fly ash, silica fume and there can also be added inorganic salts according to JP 2005139010, antibacterial penetration hardening agent, penetration hardening agent for maintenance of stone constructions which comprises 1 to 12% of antibacterial organic compounds and inorganic fillers consisting of pulverized stone powder, particles of water granulated blast-furnace slag, portland cement, gypsum and inorganic pigments according to JP 10025175, algae and mould resistant concrete mixture, which is composed of cement, aggregates and comprises at least one material such as silica fume, fly ash and fine powder of blast-furnace slag, into which selective organic herbicide and/or inorganic metallic ion antibacterial agent is added in the amount of 0.3 to 6 kg/m³ of concrete mixture according to JP 09002859.

The invention is characterized in that antimicrobially active agent for building industry is metallurgical slag.

The invention is also characterized in method of production of antimicrobially active agent for building industry, in which metallurgical slags are antimicrobially activated mechanically and/or chemically.

The invention is further characterized in use of metallurgical slags as antimicrobially active agent for building industry.

The invention does not relate to currently used antimicrobial additives such as common biocides based on organic compounds and inorganic compounds with content of Ag⁺, Cu²⁺ and Zn²⁺, bioactive glasses, glass-ionomer cements, medicinal cements and pharmaceutical and disinfecting preparations.

Antimicrobial activity of metallurgical slags is activated mechanically and/or chemically.

Mechanical activation is carried out by crushing and/or grinding and/or spreading and/or separation and/or mixing. The slags are batched either to crushing units in the process of crushing and/or to grinding units in the process of grinding and/or to separation units in the process of separation and/or to mixing units in the process of mixing of either slags as such and/or in the preparation of cements and/or building binders and/or cement containing mixtures and/or building products and/or building materials. The slags are activated by mechanical treatment by the change of size of particles, of granulometry of metallurgical slags, of grain distribution of the particles, of specific surface, of surface electrostatic charge of particles, of surface tensions, or of surface energy forces. Number of particles greater than 500 µm, after mechanical activation, is maximum 99% by weight of overall granulometry.

Chemical activation is carried out by addition of activators to the slags, such as inorganic and/or organic compounds, e.g. compounds with bound ions of alkali metals (Na⁺, K⁺...) and metals of alkali earths (Ca²⁺, Ba²⁺...), cement clinkers, cements, additives and admixtures used in cement production, e.g. grinding aids, setting time regulators, additives used in the production of concretes, mortars, dry plastering mixtures, e.g. plasticizers, aeration additives, accelerating additives, inhibiting additives, lime, calcium hydrate, limestone, dolomite, gypsum, anhydrite, plaster and/or by moistening and/or steaming and/or autoclaving and/or thermal treatment by drying and/or overheating and/or burning.

The slags are activated by chemical treatment by either modifying of their chemical composition and/or their mineralogical composition and/or destruction of slag structure and/or excitation of hydrating reactions and/or excitation of binding processes and/or releasing of ions and complex compounds out of the slag structure including heavy metals and/or by change of pH and/or change of surface charges and forces and/or phase changes due to hydrating changes and/or phase changes due to thermal changes.

Antimicrobial active metallurgical slags for building purposes are applied by simply adding them to desired location and/or by adding them to cements, building binders, cement containing mixtures, building products and building materials.

The additions of antimicrobially active metallurgical slags to cements, building binders, cement containing mixtures, building products and building materials provide for their antimicrobial resistance.

The chemical composition of metallurgical slags is very important for the invention, especially the content of CaO and also mineralogical composition as well. The higher is ratio of glassy phase, the energetically richer is slag and thus more hydraulic with higher initial antimicrobial potential. Not all slags are fully suitable, some with low content of CaO or low content of glassy phase are hardly being activated, they have low antimicrobial potential after their activation, respectively.

The blast-furnace granulated and air cooled slags are by the chemical composition almost identical, but they are diametrically different by the extent of re-crystallization. Air cooled slag is completely crystallized, granulated one regularly contain more than 90% by weight of glass. The chemical composition of blast-furnace slags depends on composition of blast-furnace batches and of course on chemical composition of iron ores. Blast-furnace slags are created by cooling after tapping of melted batches. Final blast-furnace slag is composed of oxides and sulfides of elements, which are not reduced at all in blast-furnace, i.e. CaO, MgO, Al₂O₃, MnO, FeO, FeS, MnS as well as other complex compounds (e.g. silicates, ferrites, etc.). Chemical composition of major constituents of blast-furnace slags varies in the range of 30 to 52% by weight CaO, 28 to 43% by weight SiO₂, 5 to 24% by weight Al₂O₃, 0.2 to 3% by weight of ferrous and ferric oxides FeO + Fe₂O₃, 1 to 18% by weight MgO, 0.2 to 3% by weight S²⁻, 0.2 to 2% by weight MnO.

Hydraulic activity of slags is expressed by basic modulus M_{H}, what is weight ratio of sum of basic oxides to sum of acidic oxides according to reaction (4). The higher it is, hydraulic more active is the slag in process of hydration.

M_{H} = (CaO + MgO / (SiO₂ + Al₂O₃) (4)

Regarding basic modulus, blast-furnace slags are classified as basic M_{H} > 1, neutral M_{H} = 1 and acidic M_{H} < 1. The slag basicity is very important in the melting of blast-furnace batch, because in order to provide good desulphurizing capacity of the slag it is necessary to obtain basicity values over 1. Activity of slags is also defined by activity modulus M_{A}, what is weight ratio of aluminum oxide to silicon dioxide according to equation (5).

M_{A} = Al₂O₃ / SiO₂ (5)

Activity modulus M_{A} regularly varies in the range 0.1 - 0.5. The higher it is, more active is the slag.

In the iron production, slag is created by melting of iron ore tailing, slag forming admixtures and coke ashes. All impurities contained in iron ore (so called tailing composed of quartz sand, soil, clays, carbonates, sulfur and phosphorus compounds) and in coke (ashes) end in the slags. The slags contain also parts of refractory materials melted out from furnace lining. Especially compounds of sulfur and phosphorus negatively affect quality of pig iron. Because these impurities can, at certain combinations, raise melting temperature of mixture, what is not economical, corrective slag-forming admixtures are added to the blast-furnace batch, the most frequently limestone and dolomite. The composition of slag is therefore properly controlled and is relatively stable, in order to reach the lowest possible melting temperatures. Melted slag has lower density 2800 kg/m³ than pig iron with density of 7000 kg/m³, therefore melted slag floats on melted iron and can be discharged, tapped separately. Slag-forming admixtures react with components of tailing and inorganic part of fuel at temperatures to 1800 °C and produce easy-melting calcium and magnesium silicates and aluminosilicates. The liquid slag is micro-unregular melt, which is composed of cations Ca²⁺, Mg²⁺, Na⁺, K⁺, Mn²⁺, Fe²⁺, etc. and anions Si₂O₅²⁻, Si₂O₇⁶⁻, AlO₆⁹⁻, PO₄³⁻, SO₄^{2-,} S²⁻, O²⁻, etc., which, during slag cooling, mutually react producing complex chains [-Me-O-Si-]ₙ (Me is metal ion and n represents chain length) with various length and structure. When the melt is cooled quickly, the complex ions fail to decompose and to form more simple and mobile clusters of ions, which could easily diffuse in the melt and become crystallization nuclei. The melt is by quick cooling undercooled and hardens to the glass. The slag glass structure is similar to the structure of common glass. It form three-dimensional lattice, which is filled with complex anions and cations. Amphoteric elements Al and Fe can, in the glass structure, form groups with acidic feature AlO₄⁵⁻ and FeO₄⁵⁻, or basic feature AlO₆⁹⁻ and FeO₆⁹⁻, the glass properties are significantly changing by ratio of groups MeO₆⁹⁻ / MeO₄⁵⁻. Some slag melts, mainly with high content of SiO₂ and Na₂O are in the process of cooling separated to two liquids, they segregate by separation of one liquid within the other in the form of small drops, what causes micro-heterogeneity of glass structure. There are also small crystals, crystallization nuclei as directed grouping of ions, appearing in the slag glass. The most stable groupings of ions are Ca₂SiO₄, CaSiO₃, Na₂Si₂O₅, Na₂SiO₃ and other.

Depending on the way of its cooling various kinds of slags develop. If the slag is slowly cooled in the open air, air cooled slag is developing. If it is cooled by water in water pools or by stream of water, granulated slag develops in the form of coarse sand having yellow-brown even gray colour. Air cooled slags have dark gray colour. Fast cooling of slag by water, prevents its re-crystallization and slag possesses glassy character and it can contained up to 30% of water immediately after granulation. This amount of water changes during storage, handling and transportation of granulated slag in the form of coarse sand, it drops to values of approx. 10%. If slag is cooled by water and air in combination in granulating wheel, pelleted slag so develops in the form of spherical particles with minimal content of water.

The basic slags crystallize quickly, acidic ones slowly. Slowly cooled basic slags substantially completely crystallize out. They are formed by conglomerate of various stable crystalline phases connected with small amount of glassy phase of varying composition. The acidic slags, even when cooled slowly, crystallize less due to fast growth of their viscosity. SiO₂ forms very viscous melt. If cooled quickly, slags crystallize out only partially and they are from 90 to 95% composed of glassy phase. Constituting minerals in the slowly cooled acidic slags are anortite CAS₂, diopside CMS₂, hedenbergite CaO.FeO.2SiO₂. There are especially gehlenite C₂AS, akermanite C₂MS₂, melilite - solid solution of gehlenite and akermanite, merwinite C₃MS₂, wollastonite β-CS, pseudowollastonite α-CS, belite β-C₂S, shanonite γ-C₂S, rankinite C₃S₂, monticellite CMS, calcium aluminates CA, C₁₂A₇, CA₂, magnesium spinel MA, enstatite MS, forsterite M₂S, present in the neutral and basic slags. Secondary constituents such as Fe₂O₃, MnO, sulfur in amount to 2% compose solid solutions with constituting minerals. At higher content, magnetite FeO.Fe₂O₃, hematite Fe₂O₃, wüstite FeO, oldhamite CaS, alabandite MnS, pyrhotine FeS, tefroite 2MnO.SiO₂, rodonite MnO.SiO₂, manganous spinel MnO.Al₂O₃ and other can form separate phases. There can occur also perovskite CaO.TiO₂, ilmenite FeO.TiO₂, fluorite CaF₂ and carbides in some slags. During slow cooling of the basic slags occurs so called silicate decomposition, caused by transformation of β-C₂S to γ-C₂S, which is accompanied by volume growth about 10%. Slag decomposition can occur also in hydrating of free CaO, so called calcerous decomposition or of free MgO, so called magnesium decomposition. Manganous sulfide MnS and ferrous sulfide FeS react with water according to reaction (6).

MnS + 2H₂O → H₂S + Mn(OH)₂ (6)

The volume of phases developed by the reaction is significantly greater than of initial constituents, what causes so called manganeseous or ferrous decomposition of slag. In wet environment, regarding to iron, oxidation can also occur of Fe²⁺ to Fe²⁺ with development of ferrous sulphate and also ferric sulphate, what is associated with increase of volume about 40%. The threat of decomposition of granulated slags resides also in their slow re-crystallization with development of crystals of gehlenite, akermanite, merwinite and other phases.

The air cooled blast-furnace slags are identical with granulated blast-furnace slags by their chemical composition, but very different by their mineralogy, either they do not contain glassy phase, or contents of this phase is minimal. They are well crystallized and in regard of mineralogy they are composed of melilite, solid solution of gehlenite C₂AS and akermanite C₂MS₂, merwinite C₃MS₂, calcium aluminate ferrite C₄AF, quartz SiO₂.

The steel and ladle slags have completely different chemical as well as mineralogical composition than the blast-furnace slags. The colour metallurgy slags are completely different in the chemical and mineralogical composition from said slags from production and refining of iron and steels.

The steel slags are richer with FeO, Fe₂O₃ respectively. The chemical composition of major constituents of demetalized steel slags varies in the range Fe total 17 to 30% by weigh, 24 to 43% by weight of iron oxides FeO + Fe₂O₃, 40 to 51 % by weight of total CaO, free lime CaO 4.5 to 11% by weight, 8 to 17% by weight of SiO₂, 1 to 8% by weight of Al₂O₃, 1 to 8% by weight of MgO, total sulfur S 0.04 to 0.25% by weight, 1 to 5% by weight of MnO. The main minerals are wüstite FeO, solid solution of magniesiawüstite (Fe,Mg)O, dicalcium silicates α'-C₂S and β-C₂S, tricalcium silicate C₃S, free lime CaO, which then hydrates to portlandite Ca(OH)₂ and after carbonation it changes to calcite CaCO₃, calcium ferrites C₂F, CF, CF₂, calcium aluminate ferrite C₄AF, calcium aluminates CA, C₁₂A₇, C₃A, melilite solid solution of gehlenite C₂AS and akermanite C₂MS₂, merwinite C₃MS₂, hematite α-Fe₂O₃, β- Fe₂O₃, magnetite Fe₃O₄, periclas MgO. Phosphorus is in the slag bound with dicalcium silicate in the form of solid solution C₂S - C₃P, sulfur as CaS is bound with calcerous ferrite as Ca-S ferrite. The steel slags are not granulated as they in fact do not contain glassy phase.

The calcerous ladle slags are rich with CaO with varied chemical composition according to type of steel, with which they are used, practically in ten main compositions. They may contain 38 to 60% by weight of CaO, 9 to 32% by weight of SiO₂, 7 to 19% by weight of Al₂O₃, 0.01 to 3% by weight of Fe₂O₃, 0.6 to 9% by weight of FeO, 0.5 to 2% by weight of SO₃, 3.3 to 13% by weight of MgO, 0.1 to 5% by weight of MnO with possible content of CaF₂ 0 to 10% by weight. The calcerous slags contain also ferrous iron in the form of teardrops, which however, can be separated out. The content of glassy phase depends on cooling speed, but neither these slags are granulated, therefore its content is also in this case low. The mineralogical composition of calcerous slags is composed of larnite β-C₂S, tricalcium aluminate C₃A, gehlenite C₂AS, calcium aluminate ferrite C₄AF, shanonite γ-C₂S, which causes spontaneous decomposition and pulverization, free lime CaO, quartz SiO₂, metallic iron, gypsum CaSO₄.2H₂O.

The slags from production, processing and refining of non-ferrous metals are mainly acidic with raised content of SiO₂ 27 to 45% by weight and iron Fe 14 to 32% by weight and small amount of CaO 5 to 23% by weight, the amount of sulfur S ranges between 0.1 to 3% by weight. The main minerals of these slags are fayalite 2FeO.SiO₂, magnetite Fe₃O₄, anortite CAS₂ and pyroxene group minerals of the type ABT₂O₆ (A - Na⁺, Ca²⁺, Fe²⁺, Mg²⁺, Zn²⁺, Mn²⁺, Li⁺; B - Al³⁺, Fe³⁺, Mg²⁺, Mn²⁺, Ti³⁺, Cr³⁺; T - Si⁴⁺, Al³⁺). During the fast cooling these slags practically completely turn to glass, which is hard to grind, during the slow cooling content of glassy phase decreases to 20 to 40% by weight.

It is advantageous, if the metallurgical slags contain higher amount of fluorides, or fluorine containing compounds.

Significant differences in the chemical and mineralogical composition of metallurgical slags require different approaches to their activation in order to generate their antimicrobial effects.

As mentioned, metallurgical slags are activated mechanically and/or chemically, to obtain antimicrobial effects.

Mechanical activation includes the change in particle size, change of granulometry of metallurgical slags, grain distribution of the particles, specific surface, surface electrostatic charge of particles, surface tensions, surface energy forces.

During the mechanical activation by comminution it comes to destruction of electrovalent bonds of type Si-O and to creation of unbalanced primary valence forces of opposite polarity at both newly formed surfaces of ground particles. Electrostatic charges exist only on the surface of particles of fine ground slags. Static electric charges of opposite polarity cause clustering of particles of fine ground slags during grinding - agglomeration. The surface energy forces are increased in direct proportion to increasing of surface of ground particles. The agglomeration is greater, the finer are ground particles, the greater is specific surface of fine ground slags.

The surface charge of particles of fine ground slags influences viability of microorganisms. Intensity of the surface charge can be controlled by grinding aids. Grinding aids are antistatic polar compounds. Regarding its polarity, these compounds preferably bind with reactive centers of grains surfaces of fine ground slags, which are formed by destruction of electrovalent bonds during grinding. The grinding aids in this manner weaken forces of surface tension, which cause agglomeration of ground slag particles. They thus enlarge active surface of slags also during hydration and thus release of ions to environment. Released ions also affect viability of microorganisms.

Also water itself as polar molecule affect surface charge. With regard to the presence of polar covalent bond H-O, oxygen is more electronegative than hydrogen and has fractional negative charge, however this effect is low when compared to the grinding aids.

Chemical activation closely relates to the content of glassy phase, the chemical and mineralogical composition of metallurgical slags. The granulated blast-furnace slag with the highest content of glassy phase is used as binding active admixture, other slags in building mixtures serves rather as inactive space filler in building product.

The granulated blast-furnace slag has latent hydraulic properties dependent on its chemical and phase composition, especially on the content of glassy phase. Its binding properties can be excited by addition of cement, thus portland cements with granulated blast-furnace slag as minor additional constituent, portland slag cements, portland composite cements with granulated blast-furnace slag as main constituent or as minor additional constituent, blast-furnace cements or composite cements, all cements with granulated blast-furnace slag as minor additional constituent, respectively, special cements such as sulphate-resistant, cements having low hydrating heat release, cements having low initial strength, cements for masonry and plastering mortars with addition of granulated blast-furnace slag and various cement containing mixtures with addition of granulated blast-furnace slag are produced. They further can be excited by addition of gypsum, anhydrite, or plaster - slag-sulphate binders are thus produced, by addition of air or hydraulic lime or calcium hydrate - slag calcerous binders are thus produced, or by addition of sodium Na or potassium K hydroxides, carbonates, silicates - binders based on alkali activated slags or geopolymers binders are thus produced.

Capability of glassy as well as crystalline slags to react with water, to set and to harden depends on their extent of crystallization. Completely crystallized blast-furnace slags react with water very little or not, respectively. When they hydrate, very small amount only of gelled products is produced, mainly gelled silicic acid. The glassy slags react with water more actively than crystalline ones. While only few slag minerals have hydraulic properties in crystalline state, e.g. C₂S, in glassy state majority have them. Glass is metastable phase and in the contact with water it tends to transform to more stable crystalline phase. High internal energy of glass provides for its increased solubility in the contact with water. Regarding hydration of slags the presence of complex anions is very important, and amongst them the most active monosilicate [SiO₄]⁴⁻ and monoaluminate [AlO₄]⁵⁻ ions. In relation to pH value various complexes Al(OH)₄⁻,Al(OH)₅²⁻ or Al(OH)₆³⁻ are developed. At the beginning of hydration metastable supersaturated solution is developed, of which later hydration products are being crystallized. Hydration is carried out topochemically only on surfaces of slag grains. Colloid layers are developed on hydrating grains, mainly gels of Si(OH)₄ and Al(OH)₃, which hinder inflow of water to non-hydrated surface of grains and ions Ca²⁺ are being released to the solution. Hydration rate of glassy slags grows, similarly as it is with crystallized slags in presence of lime and calcerous sulphates. Acceleration of the hydration of glassy slag in the presence of basic Ca²⁺ ions causes destruction of colloid acidic envelopes of Si(OH)₄ and Al(OH)₃ and creation of the network of capillars through which water has access to non-hydrated grains. Ca²⁺ ions react with Si(OH)₄ and Al(OH)₃ producing primary low-alkaline calcium hydrosilicate C-S-H and calcium hydroaluminate C-A-H gels. During hydration, exchange of ions of metals (Na⁺, K⁺, Mg²⁺ etc.) for H⁺ from water environment takes place, what causes deformation of the slag structure and acceleration of its dissolving, while the ions of heavy metals are also released to the solution. The bonds Me-O (Me: Ca, Mg), Si-O-Si, Si-O-Al, Al-O-Al on the surface of slag grains in the presence of OH- and electron donoring ions Na⁺ and K⁺ in strongly alkaline environment are splitted. The bonds Me-O are weaker than Si-O and Al-O and thus more Ca and Mg is released to the surrounding water environment than Si and Al, which enrich surface of the hydrating grains of slags. Negative charges of Si-O⁻ anions are compensated by present alkali creating bonds Si-O⁻-Na⁺ and thus produced alkaline silicates are able to react with bivalent ions creating complexes of the type Si-O-Ca-OH. In the presence of ions SO₄²⁻ calcium hydrosulfoaluminates ettringite C₃A.3CaSO₄.32H₂O is developed, which after a time is transfered to calcium monosulphate C₃A.CaSO₄.12H₂O. The ions of SO₄²⁻ hinder creation of the water impermeable layers of Si(OH)₄ and Al(OH)₃, what improves hydration of the slags. By use of Na⁺ or K⁺ compounds during excitation of the hydration of slags natrium N-C-H-S or potassium hydrosilicates K-C-S-H are produced, which gradually re-crystallize to calcium hydrosilicates. During hydration the local changes of pH occur, therefore the retaining of high value of pH in solution, which promotes continuation of slag hydration is very important. Further hydration of slag is then carried out by its direct reaction with water, while in the majority C-S-H gels with lowered C/S ratio and raised content of Al, hydration products of the type C₄AH₁₃, C₂ASH₈, solid solutions of hydrotalcite mineral Mg₆Al₂CO₃(OH)₁₆.4H₂O and hydrogarnets C₃AS₃₋ₙHₙ, C₆AFS₂H₈ and ettringite are produced. The type and chemical composition of hydration products depend on chemical and mineralogical composition of the slag, on the type of activator, on specific surface and the method of treatment of the mixture during setting and hardening. At higher alkali concentration also amorphous compounds of zeolite type Meₙ[-(Si-O₂)_{z}-Al-O₂-]ₙ.xH₂O can be formed, which development is promoted by increase of Al/Si ratio and decrease of Ca/Si ratio.

The chemical activation promotes release of ions and various complex compounds to the water environment - water solution. The release of ions and complex compounds to the surrounding water environment especially close to the surface of particles grows also with increasing specific surface. In surrounding environment then comes to changes of pH of water environment. Presence of ions, in water solution affect also osmosis, i.e. the pressure of ions in solution on cell membrane of microorganisms. Primary C-S-H gels are metastable. Metastable hydration phases have higher energy, they tend to transfer to more stable hydration phases, up to crystalline forms and thus give off energy and affect energetic potential of environment.

Activated hydrating slag lowers permeability of cement stone. Insoluble colloid compounds that seal porous system of cement matrix are produced by reaction of soluble alkaline silicates with calcium hydroxide released during hydration of calcium silicates. From alkaline sulphates develops calcium sulphate, which by the next reaction forms with calcium aluminates ettringite, calcium monosulphate respectively. Decreased permeability of cement stone prevents grow-off of hyphae from mould on the surface to the volume. Because slags hydrate substantially longer compared to the cements, even after water supply is interrupted they are able to hydrate after another supply of humidity, i.e. taking water from the environment, which would be necessary for living of microorganisms.

Microorganisms require particular optimal conditions of outer environment for their growth (humidity, nutrients, osmotic pressure, temperature, light, pH of environment ...), in which their growth is maximal.

Microorganisms grow in pH range of 2.5 to 9 and optimum for various microorganisms is between pH 5 and 7.5, though exceptions exist. Generally, the majority of bacteria grow better in neutral and slightly basic environment (pH 7 and slightly over 7), while majority of fibrous fungi (mould) require acidic environment, i.e. lower than pH 7. If metallurgical slags are activated, in order to raise pH over 7 in humid environment, decrease in growth of fungi is thus obtained and pH over 9 also in growth of bacteria as well. With pH over 9 even -cidal (lethal) effect on microorganisms is attained by activated metallurgical slags.

Microbial cells has greater inner concentration of soluble substances than surrounding water environment and have thus greater osmotic pressure (osmotic pressure - pressure of ions on cell membrane). While cells are present in environment with equal osmotic pressure as is inside a cell (isotonic environment), cell normally grows and reproduces. In environment with osmotic pressure lower than is inside a cell (hypotonic environment) molecules of water passes from the outside environment to the inside of a cell, with the aim to decrease pressure of salt ions on inner membrane of a cell. As a result of this, cell with excess of water could burst. In the case of fungi and majority of bacteria this excessive passage of water to cells is prevented by relatively strong cell wall. Fibrous fungi (mould) have only thin wall at the end of hyphae, thus moving them to environment with very low osmotic pressure (hypotonic environment) can result in burst of terminal cells and leak of cytoplasm to the environment. On the contrary, in environment with osmotic pressure higher than in inside of a cell (hypertonic environment), the cell tends to dilute high concentration of salts out of cell. Water leaves from the cell to the environment, whereas the cell diminishes, and also in its relatively strong cell wall. In such environment, regarding minimized chemical activity, microbial cell only survives, it does not reproduce. It is possible to activate the metallurgical slags also in this sense of antimicrobial effect against microorganisms according to present solution.

The growth of microorganisms can be suppressed not only by change of factors of the outer environment, but also by release of antimicrobially acting substances from activated metallurgical slags. These substances inhibit growth and reproduction of cells, while they can affect their metabolism in various ways (1. inhibit synthesis of cell walls, 2. affect function of cell membranes, 3. inhibit energetic metabolism, 4. act as antimetabolites, 5. inhibit synthesis of nucleic acids, 6. inhibit protein synthesis). The same compound can affect cell of microorganisms at several locations, however by use of limited concentration of given substance in water solution, this substance attacks only one location, which is the most sensitive to its effect.
1. Microorganisms and macroorganisms except animals have protective cell surface layer - cell wall. Individual types of organisms are characterized by specific structure of cell wall. In the cell wall of all organisms typical constituent is present, which constitutes macromolecular network and provides cell with its characteristic shape and rigidity. This molecular network in walls of fungi is composed of chitin, while in majority of bacteria it is peptidoglycan. Synthesis of peptidoglycan can be intervened by several substances, which can inhibit (suppress) enzymes of biosynthesis, can bind to lipid transporters or bind to substrates (initial substances of chemical reactions). Walls of bacteria and yeast are similar in that, their main constituent is chitin, which is present mainly in growing tips of hyphae. Some antifungal active substances inhibit (suppress activity of enzyme) enzyme chitin synthetasy, as a result of what tips of hyphae swell and burst.
2. Cell membranes as composed of two layers of phospholipides, into which bigger or smaller protein molecules are sunk, which also mutually connect them. Structure of prokaryotic organisms (bacteria) is quite simple. They have only one cytoplasmic membrane, on the cell surface, though some bacteria have various folds on the inner side of membrane. Bacterial cytoplasmic membrane is place of numerous biochemical activities in cell (breathing, energetic metabolism, excretion of waste substances...). Cell structure of eukaryotic organisms (yeast, fibrous fungi) is more complex. Cell membrane is present not only on cell surface, but also on surface of some organelles inside a cell (mitochondria, chloroplast). Important constituent of eukaryotic membranes (of yeast, fibrous fungi), by which they essentially differ from prokaryotic, are sterols. Cytoplasmic membranes are semipermeable, transport of substances through them is strictly controlled, by what the cell keeps balance and stability of its inner environment. When cytoplasmic membrane is operating properly the transport of nutritients, ions, metabolites, through membrane is controlled, but due to effect of some substances, the membrane loses its controlling ability, what results in collapse of cell.
3. Antimicrobially active agents, that damage function of membrane, often have effect also on energetic metabolism (breathing), because processes of energetic metabolism are closely related to cell membranes. In prokaryotic cells (bacteria) reactions of energetic metabolism (breathing) are carried out in folds of inner side of cytoplasmic membrane, while in eukaryotic cells (yeast, fibrous fungi) these processes are carried out in mitochondria and chloroplast, which also are enveloped by cell membrane.
4. Many antimicrobial active agents including substances from activated metallurgical slags resemble by their structure primary metabolites (primary metabolites - substances that are formed during normal cell metabolism and subsequently enter further biochemical processes in cell) and can enter in the form of antimetabolites (substances that a cell is not able to include in its metabolism, however they resemble by their structure primary metabolites) as their inhibitors. This results in the production of defective product of biochemical reaction, whereas normal function of a cell is disturbed, as a result of what is its death. Typical antimetabolites of amino acids (constituents of proteins), purines (constituents of nucleic acids), pyrimidine (consituents of nucleic acids), and vitamins (substances necessary for normal function of enzymes).
5. Antimicrobially active agents that inhibit (suppress) biosynthesis of nucleic acids DNA (deoxyribonucleic acid) and RNA (ribonucleic acid), can intervene these processes at various levels. The first level is metabolism of nucleotides, which are precursors (building components) of nucleic acids. They can inhibit nucleotide synthesis itself, or directly build-in instead of analogical nucleosides (building constituents of nucleic acids) to DNA or RNA, thus producing biochemically inactive nucleic acids.

The second level of interventions is polymerization of nucleic acids itself (creation of copies). Antimicrobially active agents bind with DNA, create complexes with it and prevent its functions in polymerization reactions.
6. Biosynthesis of proteins (protein synthesis) in cells is complex process. Protein synthesis inhibitors can inhibit (suppress) prokaryotic (in bacteria), eukaryotic (yeast, fibrous fungi) or both systems at once. Protein synthesis is carried out in three phases: initialization (beginning), propagation (continuing) and termination (ending), whereas intervention at each phase has fatal consequences for a cell. Localization of intervention depends on intensity of activation of metallurgical slags.

High concentrations of ions and complex compounds released from antimicrobially activated metallurgical slags act on microbial cell in inhibiting manner, affecting vital functions. They inhibit transport of electrons during breathing that occurs in membrane of bacteria and mitochondria (organelles in eukaryotic cells) of yeast and mould.

Antibacterially active agents from antimicrobially activated metallurgical slags intervene cells of bacteria and fungi in various ways. Toxicity for microbial cells is indicated even at very low concentrations. Activity of ions and complex compounds depends on temperature and pH of the environment. Ions and complex compounds inhibit activity of number of enzymes, react with electron donor groups, side chains of amino acids, carboxyl groups (-COOH) and thio-groups (-SH) of proteins, inhibit respiratory processes (breathing), prevent untwisting of double helix of DNA (deoxyribonucleic acid). Many enzymes are necessary for energy production of a cell, but when they are denatured by ions and complex compounds from activated metallurgical slags, they are not able to provide given function.

The ions and complex compounds from antimicrobially activated metallurgical slags have chemiosmotic effect, they interact with proteins and probably also with phospholipides, which serve as proton pumps in cell membranes. Micromolar concentrations of ions from activated metallurgical slags on the surface of cell membrane create total destruction of ΔpH and potential gradient (Δψ). They cause collapse of proton gradient in the membranes, thus causing failures of cell metabolism (chemical reactions in cell) and subsequently death of cell.

The ions and complex compounds from antimicrobially activated metallurgical slags thus have not only one mechanism of action. Mechanism depends on concentration of ions and complex compounds from activated metallurgical slags in the environment and on cell response to them.

Inhibiting effect of ions and complex compounds from antimicrobially activated metallurgical slags is caused by oxidation of thio-groups (-SH) of amino acids.

The ions and complex compounds from antimicrobially activated metallurgical slags are able to bind by strong and stable bond to biomolecules such as proteins and enzymes. These ions react with thio-groups (-SH) of cysteine (amino acid) and atoms of sulfur (-SCH₃) in methionine (amino acid). Such metal-amino acids can be then built-in to proteins and enzymes in organism, while damaged and non-functional forms of enzymes are produced.

In order to have antimicrobially activated metallurgical slags antimicrobially active in various kinds of cements, building binders, cement containing mixtures, building products and building materials, they must be present in particular concentrations. Contrary to common commercial biocide additives, which active concentrations ranges, on the order, in tenths to oneths % by weight, antimicrobially activated metallurgical slags concentrations are given in, on the order, tens of % by weight. Minimal inhibiting concentration of substance (MIC) is a concentration that inhibit (suppress) growth of microorganisms for 100 %. Growth of microorganisms is 100% inhibited, but microorganisms are able to survive at this concentration. Minimal microbicidal concentration of substance (MMC) is concentration that has cidal effect on microorganisms (kills them). Regarding effects and concentration of biocidal additives, they have different effects on microorganisms. Microbistatic effect refers to that particular substance in particular concentration inhibits growth of microorganisms (without closer specification) for 100 %, whereas it does not kill them, but material is not invaded by microorganisms. Microbicidal effect refers to that particular substance in particular concentration inhibits growth of microorganisms (without closer specification) for 100 %, whereas it kills them. Bacteristatic effect refers to that particular substance in particular concentration inhibits growth of bacteria for 100 %, whereas it does not kill them, but material is not invaded by microorganisms. Bactericidal effect refers to that particular substance in particular concentration inhibits growth of microorganisms for 100 %, whereas it kills them. Fungistatic effect refers to that particular substance in particular concentration inhibits growth of fungi for 100 %, whereas it does not kill them, but material is not invaded by fungi. Fungicidal effect refers to that particular substance in particular concentration inhibits growth of fungi for 100 %, whereas it kills them.

Mould resistance of building materials and products is tested according to standard CSN 72 4310: 1977. Mould resistance rate is expressed on the basis of evaluation scale introduced in table No. 1.

**Table No. 1; Evaluation scale of mould resistance rate of building materials and products according to CSN 72 4310: 1977**

| Mould growth rate | Description |
|---|---|
| 0 | Mould is not growing |
| 1 | Growth is subtle (scattered colonies of mould) |
| 2 | Growth is moderate (numerous small fungi colonies or intact light growth, which covers less than 25% of sample surface) |
| 3 | Growth is intense (growth of mould covers up to 50% of sample surface) |
| 4 | Growth is very intense (growth of mould covers up to 75% of sample surface) |
| 5 | Growth of mould is complete (growth of mould covers 100% of sample surface) |

Different chemical and mineralogical compositions of metallurgical slags require different form of antimicrobial generation and subsequently different forms of application, while the most used type of metallurgical slags in building industry today is granulated blast-furnace slag.

Activated granulated blast-furnace slag with antimicrobial properties as latent hydraulic admixture is suitable for production of portland cements with granulated blast-furnace slag as minor additional constituent, portland slag cement, portland composite cements with granulated blast-furnace slag as a main component, blast-furnace cements, composite cements and all cements with granulated blast-furnace slag as minor additional constituent, special cements such as sulphur-resistant, cements with low hydration heat release, cements with low initial strength, cements for masonry and plastering mortars with addition of granulated blast-furnace slag, road cements, cements for cement-concrete pavements covering layers and various cement containing mixtures with addition of granulated blast-furnace slag. The ratio of granulated blast-furnace slag in cements can vary in range of 0.01 to 95 % by weight to amount of portland clinker, regarding type of cement, while this range includes use of granulated blast-furnace slag either as main component or supplemental and/or special component.

Cement containing mixtures and building materials are regular concrete mixtures, concrete mixtures for production of shaped blocks and prefabricates, concrete mixtures for cement-concrete covering layers of roads and pavement, tunnels, bridges, viaducts, cement containing mixtures for stabilizing base layers, cement reinforced aggregates, concretes for massive and big volume buildings, shotcretes, concretes on floors, cement glues for floor and wall tiles, cement glues for heat insulation systems, heat insulating mortars, water insulating mixtures, joint-filler compounds, mortars for masonry, mortars for plastering, finishing plasters, stucco, dry plastering mortars, leveling compounds, grouting mixtures, sealing suspensions, mixtures for maintenance and repairing of concrete constructions, maintenance mixtures, mixtures based on aluminate cement and other special types of cements and binders and so.

Building binders and special cements can be composed besides binders based on portland clinker also of binders such as aluminate cements based on calcium aluminates, refractory cements based on calcium aluminates and other phases, belite cements based on raised content of C₂S, sulfoaluminate belite cements based on phases 3CA.CaSO₄ and C₂S, white cements, color cements, hydrophobic cements, cements based on alkali activated slags, geopolymer binders, slag-sulphate and slag-calcerous binders, roman cement, hydraulic limes, binders with addition of air lime or lime hydrates, calcium sulphate binders, gypsum binders, anhydrite binders, magnesium binders and others.

Building products are commonly commercially available building products used at locations with potential occurrence of microorganisms such as e.g. siding boards, boards based on cement and wooden wool, wood fibers, concrete blocks based on cement and wood chips, supporting members, ceiling members, structural members, panels, and so.

Besides activated granulated blast-furnace slag with antimicrobial effects also all other activated metallurgical slags with antimicrobial effects can be used in cements, building binders, cement containing mixtures, building products and building materials, such as air cooled blast-furnace slags, steel slags, ladle - calcerous slags, or slags scraped in production, processing and refining of non-ferrous metals. These activated slags with antimicrobial effects in particular composites can form either coarse aggregates and/or fine aggregates and/or small aggregates and/or sand fraction and/or aggregates sand (crush aggregates) and/or sand and/or fine particles and/or fine grains and/or filler and/or stone powder and/or microparticles and/or nanoparticles and/or pigments and/or carriers of other substrates and/or fractions modifying mixability and/or fractions modifying some properties of cement containing mixtures and/or recycled aggregates.

All types of activated metallurgical slags with antimicrobial properties can be used in cements, buliding binders, cement containing mixtures, building products and building materials either separately or as a mixture of slags in amount of 0.01 to 99.99 % by weight for particular composite. Mixture of slags can contain either two or more or all types of slags, respectively, in desired proportions, while binary mixture can contain one of the slags in the amount from minimal to maximal concentration in the mixture, i.e. 0.01 to 99.99 % by weight and this rule is valid also for multicomponent mixtures, while each slag can be represented in the amount from minimal to maximal concentration in the mixture.

With increasing content of antimicrobially activated metallurgical slag, slags respectively, in cements, building binders, cement containing mixtures, building products and building materials, antimicrobial activity against microorganisms is growing as well.

Antimicrobially active metallurgical slags decrease total costs for creating antimicrobially clean environment. In combination with cements, building binders, cement containing mixtures, building products and materials they are exceptionally suitable especially for construction of new buildings, when still moist unset mortars in closed space tend to get mould. They are suitable as well as for reconstruction of buildings, flats, maintenance of microbiologically damaged places.

Antimicrobial effects of activated metallurgical slags are with this solution substantially longer-time than it is with regular biocidal preparations. However, antimicrobial effects of activated metallurgical slags in the mixtures with cements, building binders, cement containing mixtures, building products and building materials decrease over time, what depends on aging of hydrating building binder, re-crystallization of hydration phases and inclusion of active antimicrobial particles of antimicrobially activated metallurgical slags to hydration phases of hydrating stone of the binder.

### Description of embodiments of the invention

### Example 1

Firstly, antimicrobial activity of samples of individual slags on selected representatives of biodeteriogenic microflora was determined. Antimicrobial activity was determined on samples of slags 1. - blast-furnace granulated slag VGT, 2. - blast-furnace air cooled slag VCHT, 3. - demetallized steel slag DOT, 4. - ladle calcerous slag VAP, 5. - slag from copper refining CuT. Slags were activated by grinding to specific surface 400 m²/kg, without use of grinding aids. Chemical composition of individual slags is introduced in table No. 1 and mineralogical composition in table No. 2. Blast-furnace slag comprised glassy phase, over 90 % by weight and high content of glassy phase, over 60 % by weight was also in slag from copper refining, blast-furnace air cooled slag, steel and calcerous ladle slag were in fact without glassy phase.

**Table No. 2; Chemical composition of individual slags in weight units.**

| Type of slag | | VGT | VCHT | DOT | VAP | CuT |
|---|---|---|---|---|---|---|
| Slag No. | Unit | 1. | 2. | 3. | 4. | 5. |
| Ign. loss | [%] | 0,95 | 0,09 | 6,02 | 5,32 | + 4,30 |
| SiO₂ | [%] | 42,17 | 40,57 | 12,81 | 13,97 | 27,26 |
| Al₂O₃ | [%] | 6,87 | 8,12 | 1,64 | 17,77 | 7,01 |
| Fe₂O₃ | [%] | 0,32 | 2,81 | 29,78 | 1,90 | 46,64 |
| CaO | [%] | 41,92 | 41,73 | 52,30 | 58,97 | 7,48 |
| TiO₂ | [%] | 0,42 | 0,11 | 0,34 | 0,14 | 0,21 |
| MgO | [%] | 10,39 | 8,44 | 2,54 | 3,30 | 1,90 |
| K₂O | [%] | 0,60 | 0,72 | 0,04 | 0,06 | 0,40 |
| Na₂O | [%] | 0,17 | 0,19 | 0,07 | 0,07 | 1,07 |
| SO₃ | [%] | 1,84 | 2,39 | 0,28 | 1,98 | 0,15 |
| MnO | [%] | 0,68 | 2,31 | 3,54 | 0,38 | 0,61 |
| P₂O₅ | [%] | 0,05 | 0,14 | 0,48 | 0,05 | 1,26 |
| Cl | [%] | 0,01732 | 0,01115 | 0,01375 | 0,0017 | 0,0012 |
| V | [ppm] | 27,0 | 32,0 | 298 | 54,0 | 41,0 |
| Cr | [ppm] | 69,6 | 65,0 | 981,0 | 419,0 | 5740,0 |
| Co | [ppm] | 21,1 | 21,5 | 98 | 37,6 | 307,0 |
| Ni | [ppm] | 1,9 | 3,4 | 9,9 | 9,8 | 1893,0 |
| Cu | [ppm] | 1,2 | 1,5 | 10,1 | 4,9 | 7273,0 |
| Zn | [ppm] | 98,1 | 18,7 | 41,3 | 12,3 | 50 341 |
| As | [ppm] | 0,7 | 1,4 | 3,2 | 22,1 | 66,65 |
| Cd | [ppm] | 11,6 | 12,0 | 24,3 | 22,0 | 5,0 |
| Sb | [ppm] | 1,5 | 1,8 | 2,0 | 26,7 | 50,2 |
| Hg | [ppm] | 2,9 | 1,9 | 6,6 | 4,2 | 28,5 |
| TI | [ppm] | 1,5 | 3,3 | 5,6 | 6,0 | 19,0 |
| Pb | [ppm] | 4,0 | 17,6 | 3,2 | 7,5 | 9203,3 |

**Table No. 3; Identified mineralogical composition of slags**

| | |
|---|---|
| 1. | melilite - solid solution of gehlenite C₂AS and akermanite C₂MS₂ |
| 2. | melilite - solid solution of gehlenite C₂AS and akermanite C₂MS₂, C₄AF, quartz SiO₂ |
| 3. | wüstite FeO, C₄AF, free lime CaO, portlandite Ca(OH)₂, β-C₂S, quartz SiO₂ |
| 4. | free lime CaO, β-C₂S, shanonite γ-C₂S, gehlenite C₂AS, C₃A, CaSO₄.2H₂O, quartz SiO₂ |
| 5. | fayalite 2FeO.SiO₂, anortite CAS₂, pyroxene type CaAlAlO₆ |

Following Bacteria were used as model microorganisms: (G⁺) - Bacillus subtilis, Staphylococcus aureus, Micrococcus luteus, (G⁻) - Escherichia coli, Pseudomonas aeruginosa, Serratia marcescens, Yeast: Candida albicans, Rhodotorula glutiniss, Microscopic mycellious fungi: Aspergillus niger, Penicillium funiculosum, Chaetomium globosum, Alternaria alternata, Trichoderma viride, Caldosporium herbarum.

Antimicrobial activity of tested materials was observed on representatives of bacteria, yeast, and fibrous fungi, with object to obtain more complex view to effect of tested materials.

As nutritive media, meat-peptone bouillon for inoculation of bacteria, meat-peptone agar for cultivation of bacteria, Sabouraud glucose bouillon for inoculation of yeast and malt agar for cultivation of yeast and mycelial fungi were used.

For diluting of inoculum of bacteria and yeast physiologic solution was used, for preparation of sporeceous inoculum solution of Tween 80 was used.

### Test conditions

- number of tested samples: 5
- incubator temperature: bacteria 30 °C, yeast 28 °C, fibrous fungi 25 °C
- incubator relative humidity: 95%

**Test procedure:** Antimicrobial activity was determined by dilution methods in hardened nutritive media so that resulting concentration of tested substances in nutritive media would be 10, 20, 40 and 60%. pH of nutritive media with addition of slags was strongly basic (pH 11), thus half of samples of each slag was tested at this pH, and the second half of samples was tested at modified pH (bacteria pH 7.2, yeast and fibrous fungi pH 6.6). The first half of samples with original pH represented real conditions for growth of microorganisms in cement, the second half of the samples with modified pH represented ideal conditions for growth of microorganisms. Intensity of growth of microorganisms was compared to growth in reference nutritive medium without presence of inhibiting substance. In the case that growth of model microorganisms in presence of slags was not observed, disc with inoculum was transferred to fresh nutritive medium. After 96-hour incubation effect of slags was inspected: microbistatic (microorganisms are growing) and microbicidal (lethal) (microorganisms are not growing).
**Test results**: The highest antibacterial activity had calcerous ladle slag (4), which intensely inhibited growth of G⁺ and also G⁻ bacteria, what showed also with the lowest concentration of slag (10%) in nutritive media. 100% inhibition of growth of some bacteria was observed only in samples of slags 4, 3 and 2 in concentrations 20% - 60% of slag. Antibacterial activity of slag samples was decreasing in order: 4 > 3 > 2 > 1 > 5.

Growth of all model yeasts was 100% inhibited at as low concentration as 20% of slag 1 (blast-furnace granulated slag VGT) and 3 (demetallized steel slag DOT), and 10% of slag 4 (calcerous ladle slag). Antiyeast activity of slags was decreasing in order: 4 > 1 = 3 > 2 > 5.

Used model fibrous fungi were sensitive to presence of slag samples in various ways. As it is apparent from results of inhibition, all slags inhibited growth of fibrous fungi in concentration 60 % by weight, growth of fungi 100% - 50% inhibited. The most sensitive to presence of all slags were responding fibrous fungi *Aspergillus niger* and *Trichoderma viride*, the growth of which in concentrations 20% - 60% of all slag samples, was inhibited on 100% with static effect (they stopped growth of fungi), and in concentration 60% by weight of slag 4 (calcerous ladle slag VAP) with -cide effect (killed fungi). The most resistant fibrous fungus was *Alternaria alternata*. Its growth was the most intensely inhibited by slag 4 (calcerous ladle slag VAP), 100% inhibition was observed at 40% - 60% by weight of slag, with static effect. The most inhibiting activity for all fungi was disposed by slag 4 (calcerous ladle slag VAP), which 100% inhibited growth of almost all model fibrous fungi in concentrations 20% - 60%, with static effect.

Regarding that model fibrous fungi were selectively sensitive to presence of tested slags, it is possible to determine only approximate order of inhibition effectiveness of slags to fibrous micromycetes: 4 > 1 = 3 > 2 = 5. pH values of nutritive media did not significantly influence intensity of inhibition of growth of model microorganisms.

### Example 2

The tests of mechanically activated fine ground blast-furnace slag with specific surface 440 m².kg⁻¹.
**Tested sample:** fine ground granulated slag with specific surface 440 m².kg⁻¹ in mixtures with cement CEM I 42.5 N in concentrations 80 % by weight (what corresponds to blast-furnace cement CEM III/B 32.5 N according to standard EN 197-1: 2000), 40 % by weight (what corresponds to blast-furnace cement CEM III/A 32.5 N according to standard EN 197-1: 2000), 20 % by weight (what corresponds to portland slag cement CEM II/A-S 32.5 R according to standard EN 197-1: 2000) and 10 % by weight (what corresponds to portland slag cement CEM II/A-S 32.5 R according to standard EN 197-1: 2000).

Following Bacteria were used as model microorganisms: (G⁺) - Bacillus subtilis, Staphylococcus aureus, Micrococcus luteus, (G⁻) - Escherichia coli, Pseudomonas aeruginosa, Serratia marcescens, Yeast: Candida albicans, Rhodotorula glutiniss, Microscopis mycellious fungi: Aspergillus niger, Penicillium funiculosum, Chaetomium globosum, Alternaria alternata, Trichoderma viride, Caldosporium herbarum.

Despite that especially significant in building industry is resistance of materials to mould, antimicrobial activity was observed also on representatives of bacteria and yeast, in order to obtain more complex view on effect of tested materials.

Following nutritive media were used for cultivation: meat-peptone bouillon (cultivation of bacteria), meat-peptone agar (cultivation of bacteria), Sabouraud glucose bouillon (cultivation of yeast), malt agar (cultivation of yeast and mycelial fungi), Czapek-Dox bouillon (inoculation of bricks surface by biodeteriogenes). Following auxiliary solutions were used: physiologic solution, Tween 80 solution, solution of mineral elements.
**Test procedure**: Antimicrobial activity was determined by two different methods:

### Method 1

In this method, antimicrobial activity of slag was determined by dilution methods in hardened nutritive media so, that resulting concentration of tested substance in nutritive media would be 10, 20 and 40 %. pH of nutritive media with addition of slag was strongly basic (pH 10 to 11), thus half of slag samples was tested at this pH, and the second half of samples at modified pH (bacteria pH 7.2, yeast and fibrous fungi pH 6.6). The first half of samples with original pH represented real conditions for growth of microorganisms in cement, the second half of samples with modified pH represented ideal conditions for growth of microorganisms. In the case, that growth of model microorganisms in presence of slags was not observed even after 14 days, disc with inoculum was transported to fresh nutritive medium. After 96-hour incubation, effect of slags was inspected: microstatic (microorganisms are growing) and microcidal (lethal) (microorganisms are not growing). Incubator temperature was 30 °C for bacteria, and 25 to 28 °C for yeast and fibrous fungi, incubator relative humidity was 95%.

Intensity of growth of microorganisms was compared to growth on reference nutritive medium without presence of inhibiting substance.

### Method 2

Concrete bricks were prepared, inoculated by mixed biodeteriogenic microflora and incubated according to procedures stated in ON 72 2127 "Fungistatické maltoviny" (Fungistatic mortars) and ČSN 72 4310 "Zkou 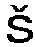 ení odolnosti stavebních výrobků a materiálů proti plísním" (Testing of resistance of building products and materials against mould). In connection with verification of antimicrobial activity of fine ground granulated slag with specific surface 440 m².kg⁻¹, aliquot part of portland cemet CEM I 42.5 N was during preparation of concrete bricks, replaced by slag in weight ratio 80% of slag : 20% of cement, 40% of slag : 60% of cement, 20% of slag : 80% of cement, 10% of slag : 90% of cement. Bricks with 100% of cement were used as reference sample. Growth of microorganisms was observed on original concrete bricks with pH not modified (pH 10 to 11), also on bricks neutralized, by boiling in distilled water with addition of HCl, on phenolphtalein to neutral reaction. The first half of samples with original pH represented real conditions for growth of microorganisms in cement, the second half of samples with modified pH represented ideal conditions for growth of microorganisms. Inoculated concrete bricks were incubated according to ČSN 72 4310, for 4 months. Bricks on which growth of microorganisms was not observed nor after 4 months, were after 4-month incubation lied on surface of fresh malt agar (imprint of brick on nutritive medium) for 30 minutes with an object to discover whether biodeteriogenic microflora does not lose its viability on the surface of concrete bricks.

Intensity of growth of microorganisms was evaluated according to ČSN 72 4310.
**Test results:** Antimicrobial activity of fine granulated slag with specific surface 400 m².kg⁻¹ was tested under conditions *in vitro* on the model representatives of bacteria (= prokaryotic microorganisms, i.e. microorganisms with simple cell structure) and fungi (= eukaryotic microorganisms, i.e. microorganisms with complex cell structure), while selected types of one-cell fungi (yeast) and multi-cell fungi (microscopic fibrous fungi) was used.

It is apparent from obtained results, that tested sample, in long-term, did not significantly affected growth of model bacteria. Intense inhibition of growth of gram-positive as well gram-negative bacteria on Method 1 (dilution method), was observed only in concentration 40% of granulated slag, and at pH 7.2 as well as pH10, while after 14 days inhibition of growth was 100%.

Growth of model yeast (one-cell fungi) in dilution testing method (Method 1) in the presence of granulated slag, was not significantly inhibited in long-term, tested substances cause only delayed growth of yeast. Significant inhibiting effect on growth of model yeast was observed only with granulated slag in concentration 40% at pH 6.6, when after 14 days no growth was observed, thus inhibition of growth of yeast was 100%.

It is apparent from obtained results that granulated slag has significant selective toxicity against microscopic fibrous fungi, whereas some fibrous micromycetes were sensitive more, some were sensitive less to presence of granulated slag in nutritive medium.

In a view of practical application interesting results were discovered during observing intensity of growth of biodeteriogenes (bacteria, yeast, fibrous fungi) on the surface of concrete bricks (Method 2) lied on surface of malt agar or above surface of distilled water. During 2-monts, 4-month, respectively, incubation of concrete bricks inoculated by suspension of biodeteriogenes either no growth of microorganisms on the surface of bricks with granulated slag was observed, or only occasional occurrence of microcolonies was observed. This phenomenon was observed with bricks lied on surface of malt agar as well as with bricks lied above the surface of distilled water, and this as well at basic and also neutral pH of concrete bricks.

The only one exception were samples containing the highest possible proportion of granulated slag (slag 80%, cement 20%), with bricks lied on the surface of malt agar. With these samples, growth of bacteria and yeast on the surface of concrete bricks was observed, independent of pH. Observation, that they were just bacteria and yeast growing on the surface of said bricks, was corresponding to previous results of cultivation (Method 1), in which almost selective toxicity of granulated slag on fibrous micromycetes was observed.

In evaluation of growth of selected biodeteriogenes on the surface of concrete bricks with granulated slag, even reduction of growth of biodeteriogenes when compared to the reference, was observed, and this with all tested ratios of granulated slag and cement, except sample - slag 80% : cement 20%.

It was discovered, when observing imprints of bricks on nutritive medium, that part of biodeteriogenic microflora has not lose its viability on concrete bricks even after 4-month incubation.

It is possible to state, based on the obtained results, that antimicrobial effect of granulated slag, added in suitable proportion to cement has positive influence on long-term protection of concrete against biodeteriogenic microflora, at basic and also neutral pH.

### Example 3

Blast-furnace slag CEM III/B 32.5 N was prepared according to standard EN 197-1: 2000, by mixing of mechanically activated - ground granulated blast-furnace slag in amount of 75% by weight to portland clinker, which was pre-ground with setting regulator - gypsum. Portland clinker and gypsum started, after adding of mixing water, chemical activation of mechanically activated granulated blast-furnace slag. Cement was used for production of concrete of strength class C 12/15 with compact aggregates from mechanically activated - crushed and subsequently to fractions separated metallurgical slag from refining of copper Cu, which was applied to stabilizing base layer of newly built landfilling site. Resistance of concrete C 12/15 against mould was tested according to standard CSN 72 4310: 1977. Based on the results of tests, said building materials can be assigned mould growth rate 0 and cement CEM III/B 32.5 N, concrete C 12/15 made of it, respectively, can be evaluated as fungistatic.

### Example 4

Blast-furnace cement with low hydration heat CEM III/C 32.5 N was prepared according to EN 197-1: 2000/A1: 2004, by mixing of mechanically activated - ground granulated blast-furnace slag in amount of 85% by weight to portland clinker, which was pre-ground with setting regulator - gypsum. Portland clinker and gypsum started, after adding of mixing water, chemical activation of mechanically activated granulated blast-furnace slag. Cement was used for production of concrete of strength class C 16/20 with compact aggregates from mechanically activated - crushed and subsequently to fractions separated steel slag, which was applied to concreting of dam body of the water plant. Resistance of concrete C 16/20 against mould was tested according to standard CSN 72 4310: 1977. Based on the results of tests, said building materials can be assigned mould growth rate 0 and cement CEM III/C 32.5 N, concrete C 16/20 made of it, respectively, can be evaluated as fungistatic.

### Example 5

Cement for masonry and plastering mortars MC 12.5 X was prepared according to standard EN 413-1: 2004 by mixing of mechanically and chemically activated calcerous ladle slag regularly used for production of raw mixture for burning of portland clinker, in amount of 25 % by weight to cement for masonry and plastering mortars and 15 % by weight of mechanically and chemically activated granulated blast-furnace slag. From said cement the masonry and plastering mortar was prepared with sand from mechanically activated - crushed and ground air cooled blast-furnace slag, which was applied in masonry and plastering of newly built house. Resistance of mortar against mould was tested according to standard CSN 72 4310: 1977. Based on the results of tests, said building materials can be assigned mould growth rate 0 and cement for masonry and plastering mortars MC 12.5 X, mortar made of it, respectively, can be evaluated as fungistatic.

### Example 6

Dry plastering mixture for inner stucco plaster for creation of fine felted pattern of interior top plaster was prepared with directional prescription:

| | |
|---|---|
| Wind-blown quartz sand 0-0.6 mm | 800 kg |
| CEM II/B-S 32.5 R | 40 kg |
| Lime hydrate | 190 kg |
| Plasticizer and dispersion agent | 0.5 kg |

Whereas, cement CEM II/B-S 32.5 R comprised 35 % by weight of ground chemically activated granulated blast-furnace slag and 1/3 of lime hydrate was replaced by hydrated calcerous ladle slag. Mixture designed for inner stucco plaster was applied for maintenance of old mould invaded inner plaster in historical building. Resistance of mixture for inner stucco plaster against mould was tested according to standard ČSN 72 4310: 1977. Based on the results of tests, said building material can be assigned mould growth rate 0 and mixture for inner stucco plaster can be evaluated as fungistatic.

### Example 7

Dry plastering mixture for joint-filling compound, which can be used for filling of joints of floor and wall tiles in interior or exterior, was prepared with directional prescription:

| | |
|---|---|
| Sand from air cooled blast-furnace slag to 0.25 mm | 500 kg |
| Cem II/B-S 32.5 R | 110 kg |
| Cem II/A-S 42.5 R | 400 kg |
| Powder pigment from slag from copper refining | 10 kg |
| Plasticizer and dispersion agent | 25 kg |

Sand from air cooled blast-furnace slag was activated mechanically by grinding under 0.25 mm and chemically by addition of 8 % by weight of water glass Na₂SiO₃, cement CEM II/A-S 42.5 R comprised 20 % by weight of ground mechanically activated granulated blast-furnace slag and CEM II/B-S 32.5 R comprised 35 % by weight of ground mechanically activated granulated blast-furnace slag. Mechanically activated slag from copper refining was used as powder pigment. Joint-filling compound was applied in building of cook-house rooms. Resistance of joint-filling compound against mould was tested according to standard CSN 72 4310: 1977. Based on the results of tests, said building material can be assigned mould growth rate 0 and joint-filling compound can be evaluated as fungistatic.

### Example 8

### Testing of resistance of building products and materials against mould

### Determined according to ČSN 72 4310.

Mixture of mould *Aspergillus niger* (CCM 8155), *Chaetomium globosum* (CCM 8156), *Penicillinum funiculosum* (CCM F-161), *Paecilomyces variotii* (CCM F-556) and *Gliocladium virens* (CCM 8042) - cultures supplied form Czech collection of microorganisms.

### Test conditions:

- number of tested samples: 9
- sample size: ∅ 5.5 cm
- incubator temperature: 28±1 °C
- incubator relative humidity: 95%
- time of incubation: 3 months
**Result:** Evaluation of sample by rate according to Table No. 1

| Mould growth rate | Description |
|---|---|
| 0 | Mould is not growing |
| 1 | Growth is subtle (scattered colonies of mould) |
| 2 | Growth is moderate (numerous small fungi colonies or intact light growth, which covers less than 25% of sample surface |
| 3 | Growth is intense (growth of mould covers up to 50% of sample surface |
| 4 | Growth is very intense (growth of mould covers up to 75% of sample surface) |
| 5 | Growth of mould is complete (growth of mould covers 100% of sample surface) |

### Results of tests:

**Table No. 4; Test results of evaluation of building materials and products resistance rate against mould according to ČSN 72 4310: 1977.**

| **Sample** | **Testing method** | **Rate of growth** | **Description** |
|---|---|---|---|
| Slag MP (428)*** | ČSN 72 4310 | 0 | mould is not growing |
| Slag MP (501) | ČSN 72 4310 | 0 | mould is not growing |
| CEM I 42,5 N (95% T 501) | ČSN 72 4310 | 0 | mould is not growing |
| CEM I 42,5 N (80% T 501) | ČSN 72 4310 | 0 | mould is not growing |
| CEM I 42,5 N (60% T 501)** | ČSN 72 4310 | 1 | growth is subtle |
| CEM I 42,5 N (40% T 501) | ČSN 72 4310 | 2 | growth is moderate |
| CEM I 42,5 N (60% T 428) | ČSN 72 4310 | 1 | growth is subtle |
| CEM I 42,5 N (40% T 428) | ČSN 72 4310 | 2 | growth is moderate |
| CEM III/A 32,5 N* | ČSN 72 4310 | 2 | growth is moderate |

| | | | |
|---|---|---|---|
| *** Slag MP (428) - granulated blast-furnace slag fine ground to specific surface 428 m².kg⁻¹ ** CEM I 42,5 N (60% T 501)- mixture of portland cement CEM I 42.5 N and 60 % by weight of granulated blast-furnace slag fine ground to specific surface 501 m².kg⁻¹ * CEM III/A 32.5 N blast-furnace cement with content of granulated blast-furnace slag 50 % by weight. | | | |

It can be read from the results, that the higher will be proportion of fine ground granulated blast-furnace slag antimicrobially mechanically activated, antimicrobially the more effective will be particular, cement containing mixture. Mixtures CEM I 42.5 N (40% T) and CEM I 42.5 N (60% T) correspond to blast-furnace cement of class CEM III/A 32.5 N, and mixture CEM I 42.5 N (95% T) corresponds to blast-furnace cement of class CEM III/C 32.5 N according to standard EN 197-1: 2000. Blast-furnace cements of class CEM III/B 32.5 N (content of granulated blast-furnace slag 66 to 80 % by weight) and CEM III/C 32.5 N (content of granulated blast-furnace slag 81 to 95 % by weight) with higher, the highest, respectively, content of granulated blast-furnace slag are the most antimicrobially effective especially against fungi with fungistatic effect.

### Industrial Applicability

Metallurgical slags with activated antimicrobial effects can be used to prevent presence, growth and reproduction of microorganisms, preferably for building industry. Cements, building binders, cement containing mixtures, building products and building materials prepared with them have wide application possibilities from preventive use to maintenance purposes. They are suitable for obtaining microbially clean environment such as pharmaceutics productions, medical operation rooms, biochemical laboratories, freezing boxes, cook houses, laundries, food productions, fruit and vegetable storehouses, animal processing production, public swimming pools, pools, hygienic facilities and anywhere else where water, higher humidity or water steam is present. Application is especially advantageous for maintenance of old moist walls, repairing of houses in flood damaged areas, repairing of various accidents connected with seepage of water or sewage. They can successfully be used for building of homes, they are suitable for production of antibacterial and anti-mould concrete mixtures, masonry mortars and mortars for plastering, dry plastering mixtures, cement binders, floor mixtures, maintenance cement coatings and other activated metallurgical slags containing building products.

## Claims

1. Use of metallurgical slags or the mixtures of metallurgical slags containing a glassy phase, with the number of particles greater than 500 µm of maximum 99% by weight of overall granulometry as antimicrobially active agent for production of cements, building binders, cement containing mixtures and building products and building materials, wherein if a slag from the production, processing, or refining of a non-ferrous metal is used, the slag contains 5-23% by weight of CaO, 27-45% by weight of SiO₂, 14-32% by weight of Fe, and 0.1-3% by weight of S.

2. Use according to claim 1, where metallurgical slags are granulated blast-furnace slag and/or air-cooled blast-furnace slag and/or steel slag and/or ladle calcerous slags and/or slag from production, refining and processing of non-ferrous metals.

## Patentansprüche

1. Anwendug von metallurgischen Schlacken oder Mischungen von metallurgischen Schlacken, die eine Glasphase beinhalten, mit einer Vielzahl von Partikeln, die größer als 500 µm, maximal 99 Gewichtsprozent der ganzen Granulometrie sind, als antimikrobialwirksame Stoffe zur Herstellung von Zementen, Baubindemitteln, zementhaltigen Mischungen, Bauprodukten und Baustoffen, wobei wenn wir die Schlacke aus Produktion, Verarbeitung oder Raffination eines Nichteisenmetalls benutzen, enthält die Schlacke 5-23 Gewichtsprozent von CaO, 27-45 Gewichtsprozent von SiO₂, 14-32% Gewichtsprozent von Fe und 1-3 % Gewichtsprozent von S.

2. Anwendung nach dem Anspruch 1, wobei die metallurgischen Schlacken granulierte Hochofenschlacke und/oder luftgekühlte Hochofenschlacke und/oder Stahlhüttenschlacke und/oder Kalkbeckenschlacken und/oder Schlacke aus Produktion, Raffination und Verarbeitung von Nichteisenmetallen sind.

## Revendications

1. Utilisation des laitiers métallurgiques ou des mélanges de laitiers métallurgiques contenants la phase de verre, avec la quantité des particules plus de 500 µm au maximum 99% en poids de la granulométrie totale, en tant que la substance active antimicrobienne, pour la fabrication de ciments, de liants pour bâtiments, de mélanges cimentaires, de produits de construction et de matériaux de construction, tandis que si nous utilisons le laitier de la fabrication, du traitement ou de l'affinage d'un métal non ferreux, le laitier contient 5-23% en poids de CaO, 27-45% en poids de SiO2, 14-32% en poids de Fe et 1-3% en poids de S.

2. Utilisation selon la revendication 1, tandis que les laitiers métallurgiques sont le laitier de haut fourneau granulaires et / ou le laitier de haut fourneau refroidies à l'air et / ou le laitier d'aciers et / ou les laitiers pelviens de calcium et / ou le laitier de la production, du raffinage et du traitement de métaux non ferreux.
